# FASCICULE DE BREVET EUROPEEN

(11) **EP 4 282 284 B1**
(45) Date de publication et mention de la délivrance du brevet: **14.08.2024**
(21) Numéro de dépôt: 23172994.8
(22) Date de dépôt: 12.05.2023
(51) Int. Cl.: A23N 15/02, B07B 1/14

(54) **PROCEDE ET UNE INSTALLATION DE TRAITEMENT DE FRUITS RECOLTES EN GRAPPE, EN PARTICULIER DE RAISINS**
VERFAHREN UND ANLAGE ZUR BEHANDLUNG VON TRAUBEN VON GEERNTETEN FRÜCHTEN, INSBESONDERE WEINTRAUBEN
METHOD AND INSTALLATION FOR PROCESSING FRUIT HARVESTED IN CLUSTERS, IN PARTICULAR GRAPES

(30) Priorité: 24.05.2022 FR 2204984; 24.05.2022 FR 2204985
(43) Date de publication de la demande: 29.11.2023
(73) Titulaire: Bucher Vaslin, 49290 Chalonnes sur Loire (FR)
(72) Inventeur: NOILET, Pascal, 49000 Angers (FR); DOINARD, Venceslas, 66440 Torreilles (FR)
(74) Mandataire: Ipsilon

(56) Documents cités:
- EP-A1- 3 006 120
- EP-A1- 3 794 961
- US-A1- 2017 050 218

## Description

La présente invention concerne un procédé et une installation de traitement de fruits récoltés en grappe, en particulier de raisins.

Elle concerne en particulier une installation de traitement de fruits récoltés en grappes, ladite installation comprenant au moins un érafloir et un dispositif de tri, ledit érafloir comprenant au moins une entrée, une première sortie, une deuxième sortie disposée entre l'entrée et la première sortie, au moins un élément d'éraflage s'étendant entre l'entrée et la première sortie dudit érafloir et un système d'entraînement en déplacement dudit au moins un élément d'éraflage.

Des installations de traitement de fruits récoltés en grappes, en particulier de vendange, comprenant au moins des grains ou baies et une matière autre que les grains en vue de la séparation des grains d'au moins une partie de ladite matière sont bien connues à ceux versés dans cet art. Ces installations appelées érafloirs ou égrappoirs sont par exemple décrites dans les brevets FR 2 963 209 ou EP 3 794 961. Il convient de rappeler que l'éraflage est l'opération qui consiste à séparer les grains de raisin de la rafle, support pédonculaire vert et ligneux qui soutient et structure la grappe. La force d'éraflage est donc la force appliquée par l'élément d'éraflage mobile de l'érafloir sur la liaison rafle/baie lorsqu'ils sont en contact pour séparer la baie de la rafle. La pratique est aujourd'hui de limiter les manipulations des produits. On est donc à la recherche de solutions permettant d'effectuer au cours d'une même manipulation plusieurs opérations.

Un but de l'invention est de proposer une installation de traitement du type précité dont la conception permet de manière simple, d'opérer plusieurs opérations sans accroître le nombre de manipulations des produits.

A cet effet l'invention a pour objet une installation de traitement de fruits récoltés en grappes, ladite installation comprenant au moins un érafloir et un dispositif de tri, ledit érafloir comprenant au moins une entrée, une première sortie, une deuxième sortie disposée entre l'entrée et la première sortie, au moins un élément d'éraflage s'étendant entre l'entrée et la première sortie dudit érafloir et un système d'entraînement en déplacement dudit au moins un élément d'éraflage, caractérisée en ce que le dispositif de tri comprend au moins une première surface de tri disposée sous l'érafloir au moins à la verticale de la partie de la deuxième sortie de l'érafloir jouxtant l'entrée et une deuxième surface de tri disposée sous l'érafloir au moins à la verticale de la première sortie de l'érafloir, en ce que l'installation comprend un déflecteur, et en ce qu'au moins une partie du déflecteur est disposée entre l'élément d'éraflage et le dispositif de tri et délimite au moins deux surfaces de guidage, l'une en direction de la première surface de tri, l'autre en direction de la deuxième surface de tri. Les baies les plus mûres tendent à se détacher plus aisément des rafles et sont donc libérées au niveau de la partie de l'érafloir jouxtant l'entrée de l'érafloir tandis que les baies moins mûres sont libérées au niveau de la partie de l'érafloir jouxtant la première sortie de l'érafloir. Grâce à la présence du déflecteur en combinaison avec le dispositif de tri, il est possible de trier les baies non seulement en fonction de leur dimension mais également en fonction de leur maturité. Il en résulte un gain de temps et une réduction du nombre d'opérations par rapport à l'état de la technique où le tri des baies en fonction de leur maturité s'effectue jusqu'à présent par un tri densimétrique basé sur la teneur en sucres des baies ou un tri optique, ces opérations de tri étant généralement complexes à mettre en oeuvre et nécessitant une nouvelle manipulation des produits.

Selon un mode de réalisation de l'invention, les première et deuxième surfaces de tri sont mobiles suivant une direction de déplacement et les directions de déplacement sont parallèles et de sens opposé d'une surface de tri à l'autre. Ainsi, tout risque de mélange des produits entre les première et deuxième surfaces de tri est impossible.

Selon un mode de réalisation de l'invention, les première et deuxième surfaces de tri sont mobiles suivant une direction de déplacement et les directions de déplacement sont parallèles et de même sens d'une surface de tri à l'autre. Il en résulte une installation qui peut être compacte.

Selon un mode de réalisation de l'invention, les surfaces de guidage de la partie du déflecteur disposée entre l'élément d'éraflage et le dispositif de tri forment entre elles au moins un dièdre ouvert en direction du dispositif de tri, ce dièdre délimitant depuis son sommet deux plans inclinés à pente descendante l'un, en direction de la première surface de tri, l'autre, en direction de la deuxième surface de tri, chaque plan incliné formant l'une des surfaces de guidage de la partie du déflecteur disposée entre l'élément d'éraflage et le dispositif de tri. L'alimentation des surfaces de tri peut ainsi s'opérer par chute gravitaire avec un déflecteur positionné au plus près de l'érafloir.

Selon un mode de réalisation de l'invention, l'élément d'éraflage se présente sous forme d'un élément allongé se développant longitudinalement depuis l'entrée vers la première sortie de l'érafloir et l'installation comprend un séparateur surmontant la partie du déflecteur disposée entre l'élément d'éraflage et le dispositif de tri, ce séparateur, qui se présente sous forme d'une plaque évidée centralement pour pouvoir être positionné autour de l'élément d'éraflage, s'étendant dans un plan transversal à un axe longitudinal de l'élément d'éraflage, ce séparateur étant indépendant en déplacement de l'élément d'éraflage. Un tel séparateur permet d'affiner la qualité du tri opéré.

Selon un mode de réalisation de l'invention, le séparateur est raccordé aux surfaces de guidage au niveau du sommet du dièdre.

Selon un mode de réalisation de l'invention, l'élément d'éraflage, qui se présente sous forme d'un élément allongé se développant longitudinalement depuis l'entrée vers la première sortie de l'érafloir, est entouré d'une jupe formant écran, cette jupe solidaire en déplacement de l'élément d'éraflage étant disposée au-dessus des surfaces de guidage délimitées par la partie du déflecteur s'étendant entre le dispositif de tri et l'élément d'éraflage. A nouveau, la présence d'une jupe permet d'accroitre la qualité du tri opéré.

Selon un mode de réalisation de l'invention, l'élément d'éraflage mobile de l'érafloir, qui est un élément oscillant, a la forme d'une boîte présentant deux extrémités opposées ouvertes et une paroi latérale périphérique de liaison desdites extrémités munie d'ouvertures traversantes, l'une des extrémités de la boîte forme l'entrée de l'érafloir, l'extrémité opposée de la boîte forme la première sortie de l'érafloir et en ce que les ouvertures traversantes de la paroi latérale périphérique forment la deuxième sortie de l'érafloir. Les ouvertures traversantes de la paroi latérale périphérique formant la deuxième sortie de l'érafloir peuvent être de dimension identique depuis l'entrée en direction de la première sortie de l'érafloir. En variante, ces ouvertures traversantes de la paroi latérale périphérique formant la deuxième sortie de l'érafloir peuvent être de dimension croissante depuis l'entrée en direction de la première sortie de l'érafloir. Il peut en résulter une simplification du dispositif de tri associé à l'érafloir.

Selon un mode de réalisation de l'invention, l'élément d'éraflage mobile de l'érafloir, qui est un élément rotatif, se présente sous forme d'un arbre rotatif équipé de doigts radiaux, ledit arbre rotatif étant disposé à l'intérieur d'un corps tubulaire ouvert à chacune de ses extrémités, ledit arbre rotatif s'étendant depuis l'une des extrémités ouvertes dudit corps jusqu'à l'autre extrémité dudit corps, ce corps tubulaire étant délimité par une paroi périphérique munie d'ouvertures traversantes, l'une des extrémités ouvertes du corps formant l'entrée de l'érafloir, l'autre des extrémités ouvertes du corps formant la première sortie de l'érafloir et les ouvertures traversantes de la paroi périphérique de délimitation du corps formant la deuxième sortie de l'érafloir.

Selon un mode de réalisation de l'invention, la première ou respectivement la deuxième surface de tri comprend, entre un bord dit amont et un bord dit aval, une pluralité de rouleaux adjacents parallèles, en ce que le dispositif de tri comprend des moyens d'entraînement en rotation des rouleaux de la première ou respectivement de la deuxième surface de tri dans un même sens de rotation pour permettre un déplacement des fruits récoltés en grappes à trier au-dessus de ladite surface de tri suivant une direction d'avance perpendiculaire à l'axe desdits rouleaux depuis le bord amont en direction du bord aval, lesdits rouleaux étant conformés ou disposés pour ménager au moins une ouverture ou une pluralité d'ouvertures entre deux rouleaux voisins pour permettre au moins le passage et la chute de fruits récoltés en grappes à trier de dimension inférieure à la ou aux ouvertures, les fruits récoltés en grappes à trier de dimension supérieure à la ou aux ouvertures restant au-dessus de la surface de tri et étant évacués au niveau du bord aval de celle-ci.

Selon un mode de réalisation de l'invention, le dispositif de tri comprend au moins deux bacs de collecte disposés l'un, au-dessous de la première surface de tri, l'autre, au-dessous de la deuxième surface de tri. Chaque bac correspond à des maturités de fruits différentes.

### Brève description des dessins

L'invention sera bien comprise à la lecture de la description suivante d'exemples de réalisation, en référence aux dessins annexés dans lesquels :
[Fig. 1] représente une vue schématique de côté d'une installation conforme à l'invention dont l'élément d'éraflage mobile est un élément d'éraflage oscillant avec des surfaces de tri mobiles suivant une même direction ;
[Fig. 2] représente une vue schématique de côté d'une installation conforme à l'invention avec des surfaces de tri mobiles suivant des directions opposées ;
[Fig. 3] représente une vue schématique de côté d'une installation conforme à l'invention avec des surfaces de tri mobiles suivant une même direction ;
[Fig. 4] représente une vue schématique de côté d'une installation conforme à l'invention équipée d'un séparateur et d'une jupe ;
[Fig. 5] représente une vue schématique de côté d'une installation conforme à l'invention dont l'élément d'éraflage mobile est un élément d'éraflage rotatif.

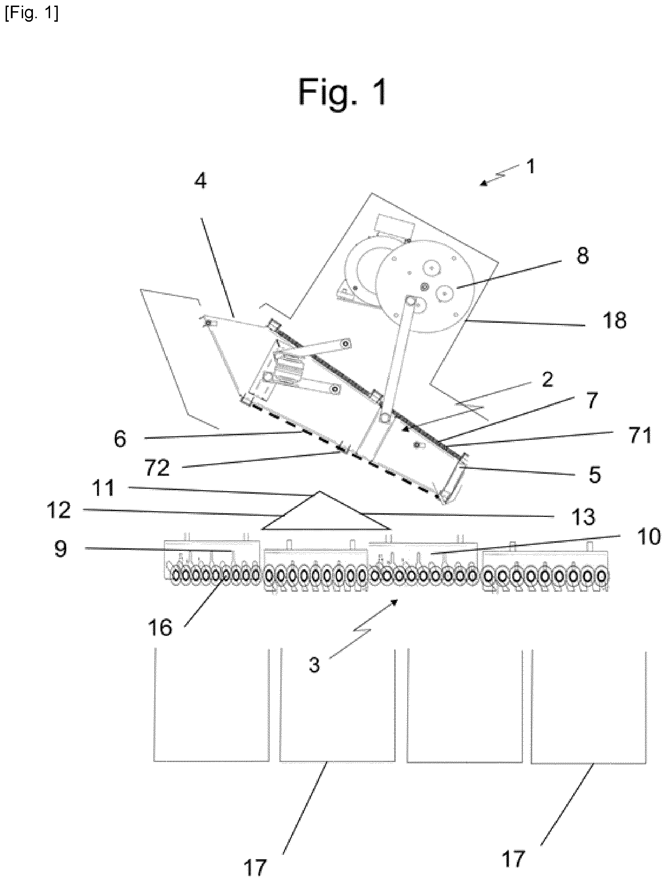

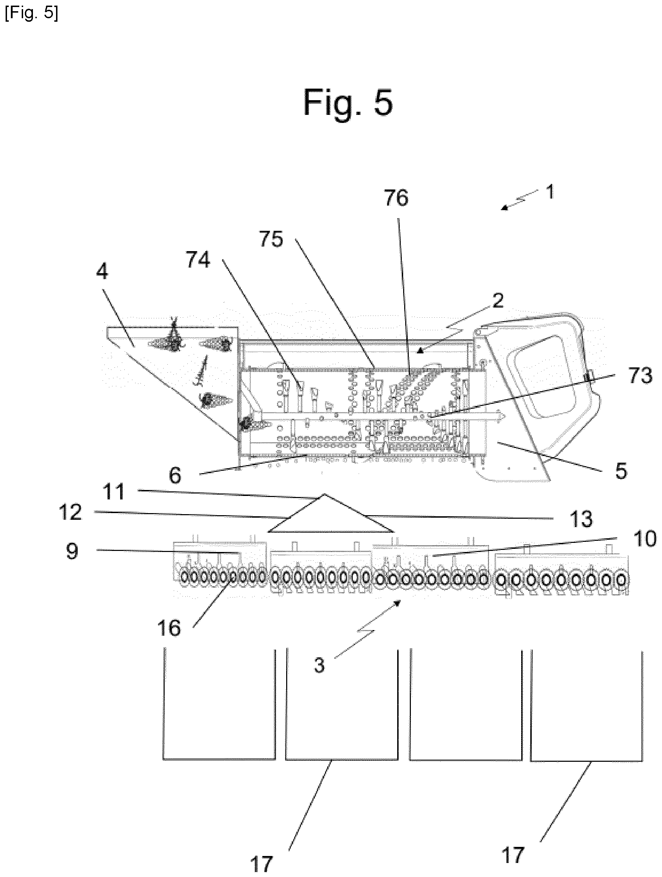

Comme mentionné ci-dessus, l'invention a pour objet une installation de traitement de fruits récoltés en grappes, en particulier de grappes de raisin ou de tomates. L'installation 1 comprend, comme illustré aux figures 1 et 5, un érafloir 2 et un dispositif 3 de tri. De manière générale, l'érafloir 2 comprend une entrée 4 d'admission de produit à érafler, une première sortie 5 qui sert généralement à l'évacuation des rafles et autres déchets mais également à l'évacuation des fruits ou baies non détachées des rafles, et une deuxième sortie 6 qui est disposée entre l'entrée 4 et la première sortie 5.

L'érafloir 2 comprend encore un élément 7 d'éraflage mobile s'étendant entre l'entrée 4 et la première sortie 5 de l'érafloir 2 et un système 8 d'entraînement en déplacement de l'élément 7 d'éraflage. Indépendamment de sa conception, l'élément 7 d'éraflage se présente sous forme d'un élément allongé se développant longitudinalement depuis l'entrée 4 vers la première sortie 5 de l'érafloir 2. Les produits cheminent depuis l'entrée 4 de l'érafloir jusqu'à a première sortie 5. Une partie des produits est, au cours de ce cheminement évacué à travers la deuxième sortie de l'érafloir 2 tandis que les produits non évacués à travers la deuxième sortie 6 de l'érafloir sont évacués par la première sortie 5 de l'érafloir 2. Les produits, en particulier les baies, se détachent des rafles au contact de l'élément 7 d'éraflage mobile et/ou en raison du mouvement de l'élément 7 d'éraflage mobile.

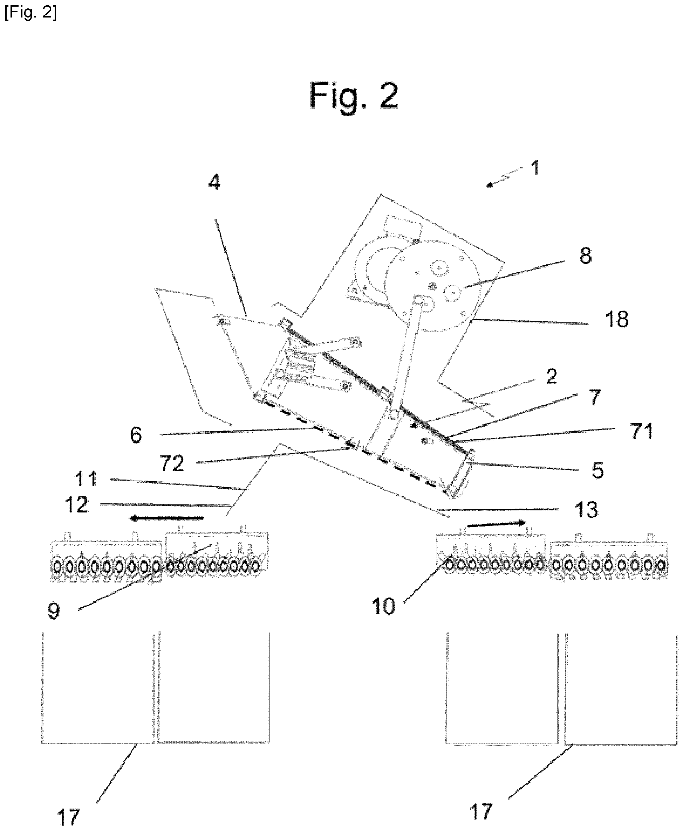

L'érafloir 2 de l'installation peut appartenir à la famille des érafloirs oscillants comme illustré par exemple à la figure 2 ou à celle des érafloirs rotatifs comme illustré à la figure 5. Dans le cas d'un érafloir 2 oscillant, comme illustré par exemple à la figure 2, l'élément 7 d'éraflage mobile ou chaque élément 7 d'éraflage mobile est un élément oscillant animé d'un mouvement d'oscillation périodique qui peut être un mouvement d'oscillation suivant une direction verticale en monte et baisse, ou suivant une direction latérale droite/gauche.

Dans les exemples représentés aux figures 1 à 4, l'élément 7 d'éraflage oscillant a la forme d'une boîte, c'est-à-dire d'un corps tubulaire présentant deux extrémités opposées ouvertes.

La boîte peut être de section quadrangulaire ou de section transversale circulaire ou autre. Cette boîte oscillante présente une paroi 71 latérale périphérique de liaison des extrémités ouvertes de la boîte munie d'ouvertures 72 traversantes. Ainsi, l'une des extrémités de la boîte forme l'entrée 4 de l'érafloir, l'extrémité opposée de la boîte forme la première sortie 5 de l'érafloir et les ouvertures 72 traversantes de la paroi 71 latérale périphérique de la boîte forment la deuxième sortie 6 de l'érafloir 2.

Les ouvertures 72 traversantes de la deuxième sortie 6 de l'érafloir 2 sont dimensionnées pour laisser passer une dimension maximale de fruits, les fruits de dimension supérieure aux ouvertures ou restés accrochés aux rafles sont évacués à travers la première sortie 5 de l'érafloir. Ces ouvertures 72 traversantes sont de préférence circulaires. Le diamètre de ces ouvertures 72 traversantes peut être identique d'une ouverture 72 traversante à une autre. En variante, le diamètre de ces ouvertures 72 traversantes peut être croissant depuis l'entrée en direction de la première sortie de l'érafloir. Il peut ainsi en résulter une simplification du dispositif de tri associé.

La boîte oscillante est couplée à un châssis 18 de l'installation, partiellement représentée aux figures, de manière à pouvoir être entraînée en déplacement à pivotement autour d'un axe pivot ou d'oscillation s'étendant transversalement à l'axe longitudinal de la boîte, cet axe longitudinal de la boîte correspondant à l'axe reliant les extrémités ouvertes de la boîte.

Cet axe pivot est disposé à l'entrée 4 de l'érafloir ou en amont de l'entrée 4 de l'érafloir pris par rapport au sens de déplacement des produits dans l'érafloir.

L'axe de pivotement ou d'oscillation peut être un axe réel ou virtuel.

On comprend qu'ainsi, l'action d'éraflage réalisée par le mouvement de la boîte est minimal, à proximité de l'axe de pivotement ou d'oscillation, et augmente à mesure que le fruit approche de l'extrémité de la boîte, formant la première sortie de l'érafloir.

Dans l'exemple représenté aux figures 1 et 2, cet axe est dit horizontal. Ainsi, la première sortie 5 de l'érafloir se déplace vers le haut et vers le bas à l'état entraîné en déplacement à pivotement de la boîte par le système 8 d'entraînement en déplacement de l'élément 7 d'éraflage mobile dudit érafloir.

En variante, l'axe pivot peut être vertical ou coudé. Ainsi, la première sortie de l'érafloir se déplace vers la droite ou vers la gauche, à l'état entraîné en déplacement à pivotement de la boîte par le système 8 d'entraînement comme cela est connu à ceux versés dans cet art.

De manière similaire à ce qui a été décrit ci-dessus, l'action d'éraflage réalisée par les mouvements de la boîte est minimal, à proximité de l'axe de pivotement d'oscillation de la boîte, et augmente à mesure que le fruit approche de l'autre extrémité de la boîte correspondant à la première sortie 5 de l'érafloir.

En variante, et comme illustré à la figure 5, l'élément 7 d'éraflage mobile de l'érafloir peut être un élément d'éraflage rotatif. Cet élément 7 d'éraflage se présente ainsi sous forme d'un arbre 73 rotatif équipé de doigts 74 radiaux. L'arbre 73 rotatif est disposé à l'intérieur d'un corps 75 tubulaire ouvert à chacune de ses extrémités. L'arbre 73 rotatif s'étend depuis l'une des extrémités ouverte du corps jusqu'à l'autre extrémité du corps.

Ce corps 75 tubulaire est délimité par une paroi périphérique munie d'ouvertures 76 traversantes.

Une extrémité ouverte du corps 75 forme l'entrée 4 de l'érafloir 2. L'autre extrémité ouverte du corps 75 forme la première sortie 5 de l'érafloir 2. Les ouvertures 76 traversantes de la paroi périphérique de délimitation du corps 75 forment la deuxième sortie 6 de l'érafloir 2.

Indépendamment de la conception de l'élément 7 d'éraflage mobile, l'érafloir 2 comprend un système 8 d'entraînement du ou des éléments 7 d'éraflage mobiles de l'érafloir.

Dans les exemples représentés, ce système 8 d'entraînement en déplacement de l'élément 7 d'éraflage comprend au moins un moteur, de préférence électrique, un mécanisme de transmission du mouvement de rotation du ou des moteurs à l'élément 7 d'éraflage dudit érafloir et une commande dudit moteur.

Dans le cas d'un élément 7 d'éraflage oscillant comme illustré aux figures 1 à 4, le mécanisme de transmission de mouvement est un entraînement à excentrique. Cet entraînement à excentrique comprend un disque à excentrique entraîné en rotation par le moteur et une liaison, telle qu'une bielle reliant le disque à l'élément d'éraflage oscillant, c'est-à-dire ici à la boîte oscillante.

Cette bielle a une extrémité qui est reliée en rotation au disque de manière excentrée, c'est-à-dire en un emplacement écarté du centre de rotation du disque et une extrémité opposée qui est reliée en rotation à la boîte au niveau d'un point de connexion adapté pour fournir à la boîte un mouvement oscillant au niveau de sa première sortie, soit vers le bas et vers le haut comme illustré aux figures, soit vers la droite et la gauche.

Le détail d'un érafloir à mouvement oscillant en monte et baisse ne sera pas fourni, car un tel érafloir est bien connu, comme l'illustre le brevet EP 3 794 961. De même, le détail d'un érafloir à mouvement oscillant droite/gauche ne sera pas fourni, car un tel érafloir est bien connu, comme l'illustre le brevet FR 2 963 909.

Dans le cas d'un élément 7 d'éraflage rotatif, le système 8 d'entraînement de l'élément 7 d'éraflage peut comprendre un moteur et une transmission mécanique du mouvement rotatif du moteur à l'arbre 73 rotatif.

Le dispositif 3 de tri comprend quant à lui une première surface de tri 9 disposée sous l'érafloir 2 au moins à la verticale de la partie de la deuxième sortie 5 de l'érafloir 2 jouxtant l'entrée 4 et une deuxième surface de tri disposée sous l'érafloir 2 au moins à la verticale de la première sortie 5 de l'érafloir et généralement au moins à la verticale de la partie de la deuxième sortie 5 de l'érafloir 2 jouxtant la première sortie.

Dans l'exemple représenté, notamment à la figure 2, la deuxième surface de tri 10 est disposée sous l'érafloir 2 et également à la verticale de la deuxième sortie 6 de l'érafloir 2 jouxtant la première sortie 5.

Dans les exemples représentés, le dispositif 3 de tri est un dispositif à rouleaux 16. A cet effet, la première surface de tri 9 comprend, entre un bord dit amont et un bord dit aval, une pluralité de rouleaux 16 adjacents parallèles. Ces rouleaux 16 sont entraînés en rotation par un moteur couplé à chacun des rouleaux par une transmission mécanique. D'autres moyens d'entraînement en rotation des rouleaux 16 peuvent être envisagés sans sortir du cadre de l'invention. Ces moyens d'entraînement en rotation des rouleaux 16 sont configurés pour entraîner en rotation les rouleaux 16 de ladite surface de tri dans un même sens de rotation pour permettre un déplacement des fruits récoltés en grappes à trier au-dessus de ladite surface de tri suivant une direction d'avance perpendiculaire à l'axe desdits rouleaux 16 depuis le bord amont en direction du bord aval. Les rouleaux 16 s'étendent donc, dans l'exemple représenté, perpendiculairement à la direction d'avance. En variante, et de manière non représentée, les rouleaux 16 peuvent s'étendre parallèlement à la direction d'avance. Les rouleaux 16 sont conformés ou disposés pour ménager au moins une ouverture ou une pluralité d'ouvertures entre deux rouleaux voisins pour permettre au moins le passage et la chute de fruits récoltés en grappes à trier de dimension inférieure à la ou aux ouvertures. Les fruits récoltés en grappes à trier de dimension supérieure à la ou aux ouvertures restent au-dessus de la surface de tri et sont évacués au niveau du bord aval de celle-ci. La deuxième surface de tri 10 est conçue de manière similaire. La première surface 9 de tri peut comporter une zone de tri amont avec un écartement des rouleaux entre eux inférieur à celui des rouleaux de la zone de tri aval. Il peut en être de même pour la deuxième surface 10 de tri.

Les première et deuxième surfaces de tri sont mobiles chacune suivant une direction de déplacement.

Dans l'exemple illustré à la figure 2, les directions de déplacement sont parallèles et de sens opposé d'une surface de tri à l'autre. Ainsi, la première surface de tri 9 ramène les produits en direction de l'entrée 4 de l'érafloir tandis que la deuxième surface de tri 10 tend à amener les produits vers la première sortie 5 de l'érafloir 2. Chaque première ou deuxième surface de tri peut être prolongée par une surface de tri supplémentaire, comme dans l'exemple représenté à la figure 2.

On note que le dispositif 3 de tri comprend au moins deux bacs 17 de collecte disposés l'un, au-dessous de la première surface de tri 9, l'autre, au-dessous de la deuxième surface de tri 10. Lorsque la première surface 9 de tri, ou respectivement la deuxième surface 10 de tri, comporte des zones de tri différenciées, il peut être prévu un bac de collecte par zone de tri.

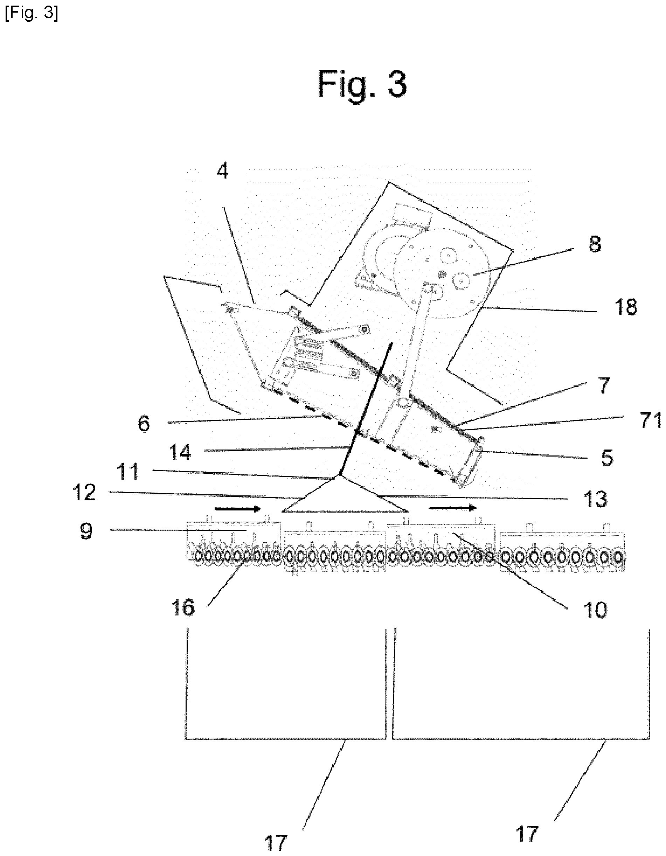

Dans l'exemple représenté à la figure 3, les directions de déplacement des première et deuxième surfaces de tri sont parallèles et de même sens d'une surface de tri à l'autre. Ainsi, sous l'érafloir, les produits se déplacent depuis l'entrée vers la première sortie 5 de l'érafloir 2.

A nouveau, le dispositif 3 de tri comprend au moins deux bacs 17 de collecte disposés l'un, au-dessous de la première surface de tri 9, l'autre, au-dessous de la deuxième surface de tri 10 surmontant la partie du déflecteur 11 disposée entre l'élément 7 d'éraflage et le dispositif 3 de tri. A nouveau également, la première et la deuxième surfaces de tri peuvent être chacune prolongées par une surface de tri supplémentaire. Pour alimenter de manière contrôlée ces première et deuxième surfaces de tri, l'installation comprend un déflecteur 11. Au moins une partie du déflecteur 11 est disposée entre l'élément 7 d'éraflage et le dispositif 3 de tri et délimite au moins deux surfaces 12 et 13 de guidage. La surface 12 de guidage est orientée en direction de la première surface de tri 9, tandis que la deuxième surface 13 de guidage est orientée en direction de la deuxième surface de tri 10.

Dans les exemples représentés, les surfaces 12 et 13 de guidage de la partie du déflecteur 11 disposée entre l'élément 7 d'éraflage et le dispositif 3 de tri forment entre elles au moins un dièdre ouvert en direction du dispositif 3 de tri. Ce dièdre délimite depuis son sommet deux plans inclinés à pente descendante, l'un en direction de la première surface de tri 9, l'autre en direction de la deuxième surface de tri 10. Chaque plan incliné forme l'une des surfaces 12 ou 13 de guidage de la partie du déflecteur 11 disposée entre l'élément 7 d'éraflage et le dispositif 3 de tri. Ainsi, les fruits sortant de l'érafloir à travers la deuxième sortie 6 de l'érafloir sont en sortie guidés par les surfaces de guidage du déflecteur. Les fruits sortant au niveau de la deuxième sortie 6 de l'érafloir jouxtant l'entrée 4 sont orientés vers la première surface de tri 9 tandis que les fruits sortant au niveau de la deuxième sortie 6 de l'érafloir jouxtant la première sortie 5 de l'érafloir 2 sont orientés vers la deuxième surface de tri 10. Ainsi, les fruits les plus mûrs sont triés au niveau de la première surface de tri et les fruits les moins mûrs sont triés au niveau de la deuxième surface de tri avant à chaque fois de chuter dans le bac de collecte disposé sur la surface de tri associée. Chaque bac de collecte peut collecter des fruits qui ont été triés en fonction de leur dimension et de leur maturité.

Pour parfaire l'installation 1, cette dernière peut comprendre, comme illustré par exemple à la figure 3, un séparateur 14. Ce séparateur 14, qui se présente sous forme d'une plaque évidée centralement pour pouvoir être positionné autour de l'élément 7 d'éraflage, s'étend dans un plan transversal à un axe longitudinal de l'élément 7 d'éraflage. Ce séparateur 14 peut être indépendant en déplacement de l'élément 7 d'éraflage. Ainsi, l'évidement central de la plaque, qui peut être une plaque en tôle, peut être surdimensionné pour autoriser le mouvement oscillant de l'élément 7 d'éraflage mobile. Ce séparateur 14 permet de former une barrière supplémentaire, empêchant les fruits sortant au niveau de la partie de la deuxième sortie de l'érafloir jouxtant l'entrée de l'érafloir de se mélanger avec les fruits sortant au niveau de la partie de la deuxième sortie de l'érafloir 2 jouxtant la première sortie 5 de l'érafloir 2.

Dans l'exemple de la figure 3, le séparateur 14 est raccordé aux surfaces 12, 13 de guidage au niveau du sommet du dièdre. Ainsi, un bord de la plaque du séparateur, à savoir le bord inférieur de ladite plaque, est fixé à l'arête sommitale du dièdre formant une partie du déflecteur.

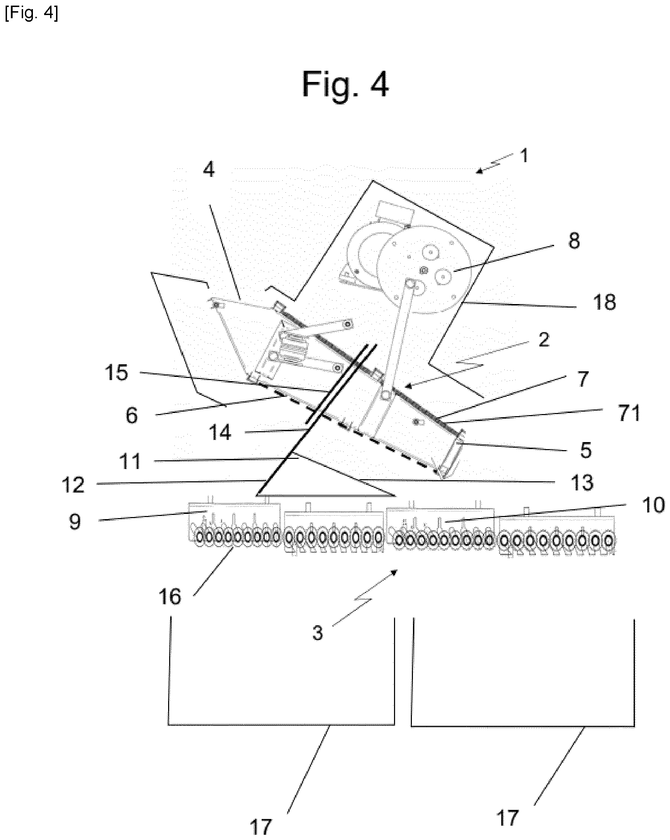

En variante ou en complément et comme illustré à la figure 4, l'élément 7 d'éraflage peut être entouré d'une jupe 15 formant écran. Cette jupe 15 solidaire en déplacement de l'élément 7 d'éraflage est disposée au-dessus des surfaces 12, 13 de guidage délimitées par la partie du déflecteur 11 s'étendant entre le dispositif 3 de tri et l'élément 7 d'éraflage. Cette jupe 15 suit le déplacement de l'élément 7 d'éraflage. A nouveau, cette jupe 15 s'étend sensiblement à la verticale de l'arête sommitale du dièdre formant une partie du déflecteur.

En pratique, le fonctionnement d'une telle installation de traitement est tel que suit. Les produits sont introduits dans l'érafloir 2 par l'entrée 4. L'élément 7 d'éraflage est entraîné en déplacement. Ce déplacement provoque une séparation des fruits et des rafles, cette séparation s'opérant plus aisément lorsque le fruit est plus mûr. En conséquence, à proximité de l'entrée, les fruits, expulsés de l'érafloir 2 par la deuxième sortie, sont guidés par le déflecteur en direction de la première surface de tri 9 tandis que les fruits non encore détachés continuent à cheminer le long de l'élément d'éraflage avant d'être expulsés de la deuxième sortie de l'érafloir au niveau de la partie de la deuxième sortie de l'érafloir proche de la première sortie de l'érafloir pour être guidés vers la deuxième surface de tri 10. Les fruits collectés au niveau de la première surface de tri sont plus mûrs que les fruits collectés au niveau de la deuxième surface de tri. Un tri dimensionnel peut, en sus, s'opérer au niveau de chaque surface de tri. Ainsi, une telle installation permet d'érafler et de trier, sur le plan dimensionnel et/ou de la forme et de la maturité des fruits, sans avoir à effectuer de reprise des fruits.

## Revendications

1. Installation (1) de traitement de fruits récoltés en grappes, ladite installation (1) comprenant au moins un érafloir (2) et un dispositif (3) de tri, ledit érafloir (2) comprenant au moins une entrée (4), une première sortie (5), une deuxième sortie (6) disposée entre l'entrée (4) et la première sortie (5), au moins un élément (7) d'éraflage s'étendant entre l'entrée (4) et la première sortie (5) dudit érafloir (2) et un système (8) d'entraînement en déplacement dudit au moins un élément (7) d'éraflage, **caractérisée en ce que** le dispositif (3) de tri comprend au moins une première surface de tri (9) disposée sous l'érafloir (2) au moins à la verticale de la partie de la deuxième sortie (6) de l'érafloir (2) jouxtant l'entrée (4) et une deuxième surface de tri (10) disposée sous l'érafloir (2) au moins à la verticale de la première sortie (5) de l'érafloir (2), **en ce que** l'installation (1) comprend un déflecteur (11), et **en ce qu'**au moins une partie du déflecteur (11) est disposée entre l'élément (7) d'éraflage et le dispositif (3) de tri et délimite au moins deux surfaces (12, 13) de guidage, l'une (12), en direction de la première surface de tri (9), l'autre (13), en direction de la deuxième surface de tri (10).

2. Installation (1) de traitement selon la revendication 1, **caractérisée en ce que** les première et deuxième surfaces de tri (9, 10) sont mobiles suivant une direction de déplacement et **en ce que** les directions de déplacement sont parallèles et de sens opposé d'une surface de tri à l'autre.

3. Installation (1) de traitement selon la revendication 1, **caractérisée en ce que** les première et deuxième surfaces de tri (9, 10) sont mobiles suivant une direction de déplacement et **en ce que** les directions de déplacement sont parallèles et de même sens d'une surface de tri à l'autre.

4. Installation (1) de traitement selon l'une des revendications 1 à 3, **caractérisée en ce que** les surfaces (12, 13) de guidage de la partie du déflecteur (11) disposée entre l'élément (7) d'éraflage et le dispositif (3) de tri forment entre elles au moins un dièdre ouvert en direction du dispositif (3) de tri, ce dièdre délimitant depuis son sommet deux plans inclinés à pente descendante l'un, en direction en direction de la première surface de tri (9), l'autre, en direction de la deuxième surface de tri (10), chaque plan incliné formant l'une des surfaces (12, 13) de guidage de la partie du déflecteur (11) disposée entre l'élément (7) d'éraflage et le dispositif (3) de tri.

5. Installation (1) de traitement selon l'une des revendications 1 à 4, **caractérisée en ce que** l'élément (7) d'éraflage se présente sous forme d'un élément allongé se développant longitudinalement depuis l'entrée (4) vers la première sortie (5) de l'érafloir (2) et **en ce que** l'installation (1) comprend un séparateur (14) surmontant la partie du déflecteur (11) disposée entre l'élément (7) d'éraflage et le dispositif (3) de tri, ce séparateur (14), qui se présente sous forme d'une plaque évidée centralement pour pouvoir être positionné autour de l'élément (7) d'éraflage, s'étendant dans un plan transversal à un axe longitudinal de l'élément (7) d'éraflage, ce séparateur (14) étant indépendant en déplacement de l'élément (7) d'éraflage.

6. Installation (1) de traitement selon la revendication 5 prise en combinaison avec la revendication 4, **caractérisée en ce que** le séparateur (14) est raccordé aux surfaces (12, 13) de guidage au niveau du sommet du dièdre.

7. Installation (1) de traitement selon l'une des revendications 1 à 6, **caractérisée en ce que** l'élément (7) d'éraflage, qui se présente sous forme d'un élément allongé se développant longitudinalement depuis l'entrée (4) vers la première sortie (5) de l'érafloir (2), est entouré d'une jupe (15) formant écran, cette jupe (15) solidaire en déplacement de l'élément (7) d'éraflage étant disposée au-dessus des surfaces (12, 13) de guidage délimitées par la partie du déflecteur (11) s'étendant entre le dispositif (3) de tri et l'élément (7) d'éraflage.

8. Installation (1) de traitement selon l'une des revendications 1 à 7, **caractérisée en ce que** l'élément (7) d'éraflage mobile de l'érafloir (2), qui est un élément oscillant, a la forme d'une boîte présentant deux extrémités opposées ouvertes et une paroi (71) latérale périphérique de liaison desdites extrémités munie d'ouvertures (72) traversantes, **en ce que** l'une des extrémités de la boîte forme l'entrée (4) de l'érafloir (2), **en ce que** l'extrémité opposée de la boîte forme la première sortie (5) de l'érafloir (2) et **en ce que** les ouvertures (72) traversantes de la paroi (71) latérale périphérique forment la deuxième sortie (6) de l'érafloir (2).

9. Installation (1) de traitement selon l'une des revendications 1 à 6, **caractérisée en ce que** l'élément (7) d'éraflage mobile de l'érafloir (2), qui est un élément rotatif, se présente sous forme d'un arbre (73) rotatif équipé de doigts (74) radiaux, ledit arbre (73) rotatif étant disposé à l'intérieur d'un corps (75) tubulaire ouvert à chacune de ses extrémités, ledit arbre (73) rotatif s'étendant depuis l'une des extrémités ouvertes dudit corps (75) jusqu'à l'autre extrémité dudit corps (75), ce corps (75) tubulaire étant délimité par une paroi périphérique munie d'ouvertures (76) traversantes, l'une des extrémités ouvertes du corps (75) formant l'entrée (4) de l'érafloir (2), l'autre des extrémités ouvertes du corps (75) formant la première sortie (5) de l'érafloir (2) et les ouvertures (76) traversantes de la paroi périphérique de délimitation du corps (75) formant la deuxième sortie (6) de l'érafloir (2).

10. Installation (1) de traitement selon l'une des revendications 1 à 9, **caractérisée en ce que** la première ou respectivement la deuxième surface de tri (9, 10) comprend, entre un bord dit amont et un bord dit aval, une pluralité de rouleaux (16) adjacents parallèles, **en ce que** le dispositif (3) de tri comprend des moyens d'entraînement en rotation des rouleaux (16) de la première ou respectivement de la deuxième surface de tri dans un même sens de rotation pour permettre un déplacement des fruits récoltés en grappes à trier au-dessus de ladite surface de tri suivant une direction d'avance perpendiculaire à l'axe desdits rouleaux (16) depuis le bord amont en direction du bord aval, lesdits rouleaux (16) étant conformés ou disposés pour ménager au moins une ouverture ou une pluralité d'ouvertures entre deux rouleaux (16) voisins pour permettre au moins le passage et la chute de fruits récoltés en grappes à trier de dimension inférieure à la ou aux ouvertures, les fruits récoltés en grappes à trier de dimension supérieure à la ou aux ouvertures restant au-dessus de la surface de tri et étant évacués au niveau du bord aval de celle-ci.

11. Installation (1) de traitement selon l'une des revendications 1 à 10, **caractérisée en ce que** le dispositif (3) de tri comprend au moins deux bacs (17) de collecte disposés l'un, au-dessous de la première surface de tri (9), l'autre, au-dessous de la deuxième surface de tri (10).

## Patentansprüche

1. Anlage (1) zur Verarbeitung von in Trauben geernteten Früchten, die Anlage (1) umfassend mindestens einen Abbeerer (2) und eine Auslesevorrichtung (3), der Abbeerer (2) umfassend mindestens einen Einlass (4), einen ersten Auslass (5), einen zweiten Auslass (6), der zwischen dem Einlass (4) und dem ersten Auslass (5) angeordnet ist, mindestens ein Abbeererelement (7), das sich zwischen dem Einlass (4) und dem ersten Auslass (5) des Abbeerers (2) erstreckt, und ein System (8) zum Antrieb einer Bewegung des mindestens einen Abbeererelements (7), **dadurch gekennzeichnet, dass** die Auslesevorrichtung (3) mindestens eine erste Auslesefläche (9) umfasst, die unter dem Abbeerer (2) mindestens senkrecht zu dem Teil des zweiten Auslasses (6) des Abbeerers (2) angeordnet ist, der an den Einlass (4) angrenzt, und eine zweite Auslesefläche (10), die unter dem Abbeerer (2) mindestens senkrecht zu dem ersten Auslass (5) des Abbeerers (2) angeordnet ist, dass die Anlage (1) einen Deflektor (11) umfasst, und dass mindestens ein Teil des Deflektors (11) zwischen dem Abbeerelement (7) und der Auslesevorrichtung (3) angeordnet ist und mindestens zwei Führungsflächen (12, 13) begrenzt, die eine (12) in Richtung der ersten Auslesefläche (9) und die andere (13) in Richtung der zweiten Auslesefläche (10).

2. Anlage (1) zur Verarbeitung nach Anspruch 1, **dadurch gekennzeichnet, dass** die erste und die zweite Auslesefläche (9, 10) entlang einer Bewegungsrichtung bewegbar sind und dass die Bewegungsrichtungen parallel und in entgegengesetzter Richtung von einer Auslesefläche zu der anderen sind.

3. Anlage (1) zur Verarbeitung nach Anspruch 1, **dadurch gekennzeichnet, dass** die erste und die zweite Auslesefläche (9, 10) entlang einer Bewegungsrichtung bewegbar sind und dass die Bewegungsrichtungen von einer Auslesefläche zu der anderen parallel und gleichsinnig sind.

4. Anlage (1) zur Verarbeitung nach einem der Ansprüche 1 bis 3, **dadurch gekennzeichnet, dass** die Führungsflächen (12, 13) des zwischen dem Abbeerelement (7) und der Auslesevorrichtung (3) angeordneten Teils des Deflektors (11) untereinander mindestens ein Dieder bilden, das in Richtung der Auslesevorrichtung (3) offen ist, wobei dieses Dieder von seiner Spitze aus zwei geneigte Ebenen mit absteigender Neigung begrenzt, eine in Richtung der ersten Auslesefläche (9) und die andere in Richtung der zweiten Auslesefläche (10), wobei jede geneigte Ebene eine der Führungsflächen (12, 13) für den Teil des Deflektors (11) bildet, der zwischen dem Abbeerelement (7) und der Auslesevorrichtung (3) angeordnet ist.

5. Anlage (1) zur Verarbeitung nach einem der Ansprüche 1 bis 4, **dadurch gekennzeichnet, dass** das Abbeererelement (7) in Form eines länglichen Elements vorliegt, das sich in Längsrichtung von dem Einlass (4) zu dem ersten Auslass (5) des Abbeerers (2) erstreckt, und dass die Anlage (1) einen Separator (14) umfasst, der über dem Teil des Deflektors (11) liegt, der zwischen dem Abbeererelement (7) und der Auslesevorrichtung (3) angeordnet ist, dieser Separator (14), der in Form einer Platte vorliegt, die mittig ausgehöhlt ist, um um das Abbeerelement (7) positioniert werden zu können, sich in einer Ebene quer zu einer Längsachse des Abbeerelements (7) erstreckt, wobei dieser Separator (14) in der Bewegung unabhängig von dem Abbeererelement (7) ist.

6. Anlage (1) zur Verarbeitung nach Anspruch 5 in Verbindung mit Anspruch 4, **dadurch gekennzeichnet, dass** der Separator (14) auf Ebene der Spitze des Dieders mit den Führungsflächen (12, 13) verbunden ist.

7. Anlage (1) zur Verarbeitung nach einem der Ansprüche 1 bis 6, **dadurch gekennzeichnet, dass** das Abbeerelement (7), das in Form eines länglichen Elements vorliegt, das sich in Längsrichtung von dem Einlass (4) zu dem ersten Auslass (5) des Abbeerers (2) erstreckt, von einer Schürze (15) umgeben ist, die eine Abschirmung bildet, wobei diese Schürze (15), die verschiebungsfest mit dem Abbeerelement (7) verbunden ist, oberhalb der Führungsflächen (12, 13) angeordnet ist, die von dem Teil des Deflektors (11) begrenzt werden, der sich zwischen der Auslesevorrichtung (3) und dem Abbeerelement (7) erstreckt.

8. Anlage (1) zur Verarbeitung nach einem der Ansprüche 1 bis 7, **dadurch gekennzeichnet, dass** das bewegliche Abbeerelement (7) des Abbeerers (2), das ein schwingendes Element ist, die Form eines Kastens aufweist, der zwei gegenüberliegende offene Enden und eine periphere Seitenwand (71) zur Verbindung der Enden aufweist, die mit Durchgangsöffnungen (72) versehen ist, und dass eines der Enden des Kastens den Einlass (4) des Abbeerers (2) bildet, dass das gegenüberliegende Ende des Kastens den ersten Auslass (5) des Abbeerers (2) bildet und dass die Durchgangsöffnungen (72) der Umfangsseitenwand (71) den zweiten Auslass (6) des Abbeerers (2) bilden.

9. Anlage (1) zur Verarbeitung nach einem der Ansprüche 1 bis 6, **dadurch gekennzeichnet, dass** das bewegliche Abbeerelement (7) des Abbeerers (2), das ein drehbares Element ist, in Form einer drehbaren Welle (73) vorliegt, die mit radialen Fingern (74) ausgestattet ist, wobei die drehbare Welle (73) innerhalb eines rohrförmigen Körpers (75) angeordnet ist, der an jedem seiner Enden offen ist, wobei sich die drehbare Welle (73) von einem der offenen Enden des Körpers (75) zu dem anderen Ende des Körpers (75) erstreckt, wobei dieser rohrförmige Körper (75) von einer peripheren Wand begrenzt ist, die mit Durchgangsöffnungen (76) versehen ist, wobei eines der offenen Enden des Körpers (75) den Einlass (4) des Abbeerers (2) bildet, das andere der offenen Enden des Körpers (75) den ersten Auslass (5) des Abbeerers (2) bildet und die Durchgangsöffnungen (76) der peripheren Begrenzungswand des Körpers (75) den zweiten Auslass (6) des Abbeerers (2) bilden.

10. Anlage (1) zur Verarbeitung nach einem der Ansprüche 1 bis 9, **dadurch gekennzeichnet, dass** die erste bzw. zweite Auslesefläche (9, 10) zwischen einem sogenannten stromaufwärtigen Rand und einem sogenannten stromabwärtigen Rand eine Vielzahl von benachbarten, parallelen Walzen (16) umfasst, dass die Auslesevorrichtung (3) Einrichtungen zum Drehantrieb der Walzen (16) der ersten bzw. der zweiten Auslesefläche in einer gleichen Drehrichtung umfasst, um eine Bewegung der auszulesenden in Trauben geernteten Früchten über die Auslesefläche entlang einer Vorschubrichtung senkrecht zu der Achse der Walzen (16) von dem stromaufwärtigen Rand in Richtung des stromabwärtigen Rands zu ermöglichen, wobei die Walzen (16) geformt oder angeordnet sind, um mindestens eine Öffnung oder eine Vielzahl von Öffnungen zwischen zwei benachbarten Walzen (16) auszubilden, um zumindest den Durchgang und den Fall von geernteten Früchten in auszulesende Trauben zu ermöglichen, die eine geringere Größe als die Öffnung(en) aufweisen, die in Trauben geernteten Früchte zum Auslesen, die größer sind als die Öffnung(en), die über der Auslesefläche verbleiben und an den stromabwärtigen Rand der Auslesefläche abgeführt werden.

11. Anlage (1) zur Verarbeitung nach einem der Ansprüche 1 bis 10, **dadurch gekennzeichnet, dass** die Auslesevorrichtung (3) mindestens zwei Sammelbehälter (17) umfasst, wovon einer unterhalb der ersten Auslesefläche (9) und der andere unterhalb der zweiten Auslesefläche (10) angeordnet ist.

## Claims

1. An installation (1) for processing fruit harvested in bunches, said installation (1) comprising at least one destemmer (2) and a sorting device (3), said destemmer (2) comprising at least one inlet (4), a first outlet (5), a second outlet (6) arranged between the inlet (4) and the first outlet (5), at least one destemming element (7) extending between the inlet (4) and the first outlet (5) of said destemmer (2) and a system (8) for driving movement of said at least one destemming element (7), **characterized in that** the sorting device (3) comprises at least one first sorting surface (9) arranged under the destemmer (2) at least vertically to the part of the second outlet (6) of the destemmer (2) adjoining the inlet (4) and a second sorting surface (10) arranged under the destemmer (2) at least vertically to the first outlet (5) of the destemmer (2), **in that** the installation (1) comprises a deflector (11), and **in that** at least part of the deflector (11) is arranged between the destemming element (7) and the sorting device (3) and delimits at least two guide surfaces (12, 13), one (12) in the direction of the first sorting surface (9), the other (13) in the direction of the second sorting surface (10).

2. The processing installation (1) according to claim 1, **characterized in that** the first and second sorting surfaces (9, 10) are movable in a movement direction and **in that** the movement directions are parallel and opposite from one sorting surface to the other.

3. The processing installation (1) according to claim 1, **characterized in that** the first and second sorting surfaces (9, 10) are movable in a movement direction and **in that** the movement directions are parallel and in the same direction from one sorting surface to the other.

4. The processing installation (1) according to one of claims 1 to 3, **characterized in that** the guide surfaces (12, 13) of the part of the deflector (11) disposed between the destemming element (7) and the sorting device (3) form therebetween at least one dihedron open toward the sorting device (3), this dihedron delimiting, from its top, two downwardly inclined planes, one toward the first sorting surface (9), the other toward the second sorting surface (10), each inclined plane forming one of the guide surfaces (12, 13) for guiding the part of the deflector (11) disposed between the destemming element (7) and the sorting device (3).

5. The processing installation (1) according to one of claims 1 to 4, **characterized in that** the destemming element (7) is in the form of an elongated element developing longitudinally from the inlet (4) toward the first outlet (5) of the destemmer (2) and **in that** the installation (1) comprises a separator (14) topping the part of the deflector (11) disposed between the destemming element (7) and the sorting device (3), this separator (14), which takes the form of a centrally hollowed plate to be able to be positioned around the destemming element (7), extending in a plane transverse to a longitudinal axis of the destemming element (7), this separator (14) moving independently of the destemming element (7).

6. The processing installation (1) according to claim 5 taken in combination with claim 4, **characterized in that** the separator (14) is connected to the guide surfaces (12, 13) at the top of the dihedron.

7. The processing installation (1) according to one of claims 1 to 6, **characterized in that** the destemming element (7), which is in the form of an elongated element developing longitudinally from the inlet (4) toward the first outlet (5) of the destemmer (2), is surrounded by a skirt (15) forming a screen, this skirt (15) secured in movement with the destemmer element (7) being disposed above the guide surfaces (12, 13) delimited by the part of the deflector (11) extending between the sorting device (3) and the destemming element (7).

8. The processing installation (1) according to one of claims 1 to 7, **characterized in that** the movable destemming element (7) of the destemmer (2), which is an oscillating element, has the shape of a box having two opposite open ends and a peripheral side wall (71) connecting said ends provided with through openings (72), **in that** one of the ends of the box forms the inlet (4) of the destemmer (2), **in that** the opposite end of the box forms the first outlet (5) of the destemmer (2) and **in that** the through openings (72) of the peripheral side wall (71) form the second outlet (6) of the destemmer (2).

9. The processing installation (1) according to one of claims 1 to 6, **characterized in that** the movable destemming element (7) of the destemmer (2), which is a rotating element, takes the form of a rotating shaft (73) equipped with radial fingers (74), said rotating shaft (73) being disposed inside a tubular body (75) open at each of its ends, said rotating shaft (73) extending from one of the open ends of said body (75) to the other end of said body (75), this tubular body (75) being delimited by a peripheral wall provided with through openings (76), one of open ends of the body (75) forming the inlet (4) of the destemmer (2), the other of the open ends of the body (75) forming the first outlet (5) of the destemmer (2) and the through openings (76) of the peripheral wall delimiting the body (75) forming the second outlet (6) of the destemmer (2).

10. The processing installation (1) according to one of claims 1 to 9, **characterized in that** the first or the second sorting surface (9, 10), respectively, comprises, between a so-called upstream edge and a so-called downstream edge, a plurality of adjacent parallel rollers (16), **in that** the sorting device (3) comprises means for rotating the rollers (16) of the first or the second sorting surface, respectively, in the same direction of rotation to allow a movement of the fruits harvested in bunches to be sorted above said sorting surface in a direction of advance perpendicular to the axis of said rollers (16) from the upstream edge toward the downstream edge, said rollers (16) being shaped or disposed to provide at least one opening or a plurality of openings between two neighboring rollers (16) to allow at least the passage and fall of fruit harvested in bunches to be sorted of a size smaller than the opening(s), the fruit harvested in bunches to be sorted of a size larger than the opening(s) remaining above the sorting surface and being discharged at the downstream edge thereof.

11. The processing installation (1) according to one of claims 1 to 10, **characterized in that** the sorting device (3) comprises at least two collection bins (17) disposed one below the first sorting surface (9), the other below the second sorting surface (10).
